# EUROPÄISCHE PATENTANMELDUNG

(11) **EP 3 978 555 A1**
(43) Veröffentlichungstag der Anmeldung: **06.04.2022**
(21) Anmeldenummer: 21203545.5
(22) Anmeldetag: 18.02.2015
(51) Int. Cl.: C08J 7/04, B29C 67/00, C08J 7/06, C08J 7/14, D06P 3/04, D06P 3/06

(54) **VERFAHREN ZUM BEHANDELN VON OBERFLÄCHEN VON KUNSTSTOFFGEGENSTÄNDEN**

(30) Priorität: 19.02.2014 DE 102014102137
(62) Teilanmeldung aus: 15705604.5
(71) Anmelder: DyeMansion GmbH, 82152 Planegg (DE)
(72) Erfinder: Kramer, Philipp, 81243 München (DE); Ewald, Felix, 78166 Donaueschingen (DE)
(74) Vertreter: 2s-ip Schramm Schneider Bertagnoll Patent- und Rechtsanwälte Part mbB

(57) **Zusammenfassung**

Bereit gestellt wird ein Verfahren zum Behandeln von Oberflächen von Kunststoffgegenständen, wobei in einem Färbeschritt
- ein Färbegemisch hergestellt wird, wobei ein Farbstoff (z.B. Metallkomplexfarbstoff) in einem Lösungsmittel aufgelöst wird, wobei dem Lösungsmittel pro Liter zwischen 0,05 g und 50 g des Farbstoffes zugegeben werden,
- das Färbegemisch auf eine Färbetemperatur zwischen 60°C und 180°C erhitzt wird,
- die Kunststoffgegenstände zum Einfärben für eine Dauer zwischen 5 Minuten und 6 Stunden in das erhitzte Färbegemisch gelegt werden,

wobei die Färbetemperatur den Schmelzpunkt des Materials der Kunststoffgegenstände nicht überschreitet, und
wobei in einem Oberflächenbearbeitungsschritt die Oberfläche der Kunststoffgegenstände unter Verwendung von Kunststoffkugeln gestrahlt wird, um die Oberfläche der Formteile zu glätten.

## Beschreibung

### Gebiet der Erfindung

Die Erfindung betrifft ein Verfahren zum Behandeln von Oberflächen von mit einem 3D-Druckverfahren hergestellten Kunststoffgegenständen sowie einen Kunststoffgegenstand, dessen Oberfläche mit einem erfindungsgemäßen Verfahren behandelt worden ist.

### Stand der Technik und Hintergrund der Erfindung

Es ist bekannt, Kunststoffgegenstände bzw. Kunststoffformteile mit einem 3D-Druckverfahren, beispielsweise einem Sinterverfahren, herzustellen, wobei der Gegenstand schichtweise aufgebaut wird. Als Ausgangsmaterial für die in einem 3D-Druckverfahren herzustellenden Gegenstände bzw. Formteile können Polyamide, beispielsweise das Polyamid PA11 oder das Polyamid PA12, oder thermoplastisches Polyurethan verwendet werden.

Die Verwendung von Polyamiden für die Herstellung von Formteilen hat allerdings den Nachteil, dass die Polyamide nur in schwarzer oder weißer Farbe verfügbar sind, sodass Formteile auch nur in den Farben Weiß und Schwarz hergestellt werden können. Es ist daher wünschenswert, die Formteile nach der Herstellung einzufärben.

Ferner ist es bekannt, Kunststoffformteile farbig zu lackieren. Nachteilig hierbei ist allerdings, dass mehrere Lackierschritte notwendig sein können, damit die Farbe bzw. der Farblack an der Oberfläche des Kunststoffformteils hält bzw. haften bleibt. Ein weiterer Nachteil besteht darin, dass der auf die Oberfläche aufgebrachte Lack leicht zerkratzen oder gar abplatzen kann, was die Ästhetik des Formteils erheblich beeinträchtigen kann.

Aus der DE 10 2010 001 101 A1 ist ein Verfahren zur Oberflächenbehandlung von Kunststoffgegenständen bekannt, bei dem der Gegenstand geglättet, gewaschen, gefärbt und versiegelt wird. Zum Färben wird der Gegenstand in ein erhitztes Tauchbad mit Farben gegeben und etwa 30 Minuten gefärbt.

Aus der DE 10 2006 015 721 A1 ist ein Verfahren zum Tönen von transparenten Formteilen, etwa optische Linsen, bekannt, die in einem Spritzgussverfahren hergestellt werden. Die transparenten Formteile sind auch nach dem Tönen bzw. Färben transparent.

Aus der US 6,713,125 B1 ist ein Verfahren zum Färben von Kunststoffteilen bekannt, bei dem der Färbevorgang bei einer Temperatur durchgeführt wird, die oberhalb der Glasübergangstemperatur der zu färbenden Kunststoffteile liegt, damit die Farbe in die Kunststoffteile eindringen kann.

### Aufgabe der Erfindung

Aufgabe der vorliegenden Erfindung ist es daher, ein Verfahren zum Behandeln von Oberflächen von mit einem 3D-Druckverfahren hergestellten Kunststoffgegenständen bereitzustellen, welches ein Einfärben der Oberflächen der Kunststoffgegenstände in einer Vielzahl unterschiedlicher Farben ermöglicht und welches einen zuverlässigen Schutz vor einem Abplatzen der aufgebrachten Farbe gewährleistet.

### Erfindungsgemäße Lösung

Diese Aufgabe wird erfindungsgemäß durch ein Verfahren zum Behandeln von Oberflächen von in einem 3D-Druckverfahren hergestellten Kunststoffgegenständen, sowie durch einen Kunststoffgegenstand nach den unabhängigen Ansprüchen gelöst. Vorteilhafte Ausgestaltungen und Weiterbildungen der Erfindung ergeben sich aus den jeweiligen abhängigen Ansprüchen.

Bereitgestellt wird demnach ein Verfahren zum Behandeln von Oberflächen von Kunststoffgegenständen, wobei in einem Färbeschritt
- ein Färbegemisch hergestellt wird, wobei ein Farbstoff ausgewählt aus der Gruppe umfassend Metallkomplexfarbstoffe, Säurefarbstoffe, Reaktivfarbstoffe, Azofarbstoffe, Dispersionsfarbstoffe, und Mischungen hiervon, in einem Lösungsmittel aufgelöst wird, wobei dem Lösungsmittel bezogen auf einem Liter zwischen 0,05 g und 50 g, vorzugsweise zwischen 0,05 g und 25 g, besonders bevorzugt zwischen 0,1 g und 10 g des Farbstoffes zugegeben werden,
- das Färbegemisch auf eine Färbetemperatur zwischen 60°C und 180°C, vorzugsweise zwischen 80°C und 150°C, besonders bevorzugt zwischen 90°C und 130°C erhitzt wird,
- die Kunststoffgegenstände zum Einfärben für eine Dauer zwischen 5 Minuten und 6 Stunden, vorzugsweise zwischen 5 Minuten und 4 Stunden, besonders bevorzugt zwischen 15 Minuten und 2 Stunden in das erhitzte Färbegemisch gelegt werden,

wobei die Färbetemperatur den Schmelzpunkt des Materials der Kunststoffgegenstände nicht überschreitet, und
wobei in einem Oberflächenbearbeitungsschritt die Oberfläche der Kunststoffgegenstände unter Verwendung von Kunststoffkugeln gestrahlt wird, um die Oberfläche der Formteile zu glätten.

Ferner hat es sich als vorteilhaft herausgestellt, wenn die Färbetemperatur die Glasübergangstemperatur des Materials der Kunststoffgegenstände nicht überschreitet.

Das Lösungsmittel kann Wasser, vorzugsweise destilliertes Wasser umfassen.

Die eingefärbten Kunststoffgegenstände können für eine Dauer zwischen 5 Minuten und 30 Minuten in auf zwischen 30°C und 80°C, vorzugsweise zwischen 45°C und 65°C erhitztes Wasser, aufweisend zwischen 1g/l und 10g/l eines amphoteren Netzmittels, gelegt werden.

Vorteilhaft ist es, wenn das Färbegemisch, vorzugsweise vor dem Einfärben der Kunststoffgegenstände, auf einen pH-Wert kleiner 11, vorzugsweise auf einen pH-Wert zwischen 3,5 und 9,5, besonders bevorzugt auf einen pH-Wert zwischen 4 und 4,5 eingestellt wird.

Ferner ist es vorteilhaft, wenn das Färbegemisch durch Hinzugabe eines Puffersystems auf den eingestellten pH-Wert gepuffert wird, wobei das Puffersystem vorzugsweise ausgewählt wird aus der Gruppe umfassend Natriumacetat, Essigsäure-Acetat, Natriumsulfat, und Mischungen hiervon.

Dem Färbegemisch kann ein amphoteres Netzmittel zugegeben werden.

Es hat sich als vorteilhaft herausgestellt, wenn in einem Wässerungsschritt eines Vorbehandlungsschrittes, der vor dem Färbeschritt ausgeführt wird, die Kunststoffgegenstände für einen vorbestimmten Zeitraum, vorzugsweise zwischen 10 Minuten und 18 Stunden, besonders bevorzugt zwischen 6 Stunden und 14 Stunden, in Wasser gelegt werden.

Der Vorbehandlungsschritt kann einen Aufbereitungsschritt umfassen, der nach dem Wässerungsschritt ausgeführt wird, wobei in dem Aufbereitungsschritt die Kunststoffgegenstände für einen vorbestimmten Zeitraum, vorzugsweise zwischen 1 Minute und 30 Minuten, besonders bevorzugt zwischen 2 Minuten und 10 Minuten, in auf zwischen 70°C und 100°C erhitztes Wasser gelegt werden. Dem erhitzten Wasser kann ein amphoteres Netzmittel zugegeben werden.

Der Vorbehandlungsschritt kann einen Oberflächenbearbeitungsschritt umfassen, der vor dem Wässerungsschritt ausgeführt wird, wobei in dem Oberflächenbearbeitungsschritt die Oberfläche der Kunststoffgegenstände, vorzugsweise unter Verwendung von Schleifmitteln, geschliffen werden.

In dem Oberflächenbearbeitungsschritt kann die Oberfläche der Kunststoffgegenstände mit einer Ameisensäure bedampft wird, womit ein noch glattere Oberfläche der Kunststoffgegenstände erreicht wird.

In einem Imprägnierschritt eines Nachbehandlungsschrittes, der nach dem Färbeschritt ausgeführt wird, können die Kunststoffgegenstände zunächst getrocknet und anschließend die Oberfläche der Kunststoffgegenstände imprägniert und/oder versiegelt werden.

Vorteilhaft ist es, wenn zum Imprägnieren und/oder Versiegeln eine Imprägnier-/Versiegelungslösung auf Polymerbasis, insbesondere eine kapillaraktive Imprägnier-/Versiegelungslösung verwendet wird.

Die Kunststoffgegenstände können für einen vorbestimmten Zeitraum, vorzugsweise zwischen 5 Minuten und 30 Minuten, besonders bevorzugt zwischen 10 Minuten und 20 Minuten, in die Imprägnier-/Versiegelungslösung gelegt werden und anschließend getrocknet werden.

Vor und/oder nach dem Imprägnierschritt kann die Oberfläche der Kunststoffgegenstände, vorzugsweise unter Verwendung von Schleif- und/oder Strahlmitteln, geschliffen und/oder gestrahlt werden.

Nach dem Imprägnierschritt kann die Oberfläche der imprägnierten und/oder versiegelten Kunststoffgegenstände poliert werden.

Die Kunststoffgegenstände können in einem 3D-Druckverfahren hergestellt werden. Das 3D-Druckverfahren kann ein Sinterverfahren, insbesondere ein selektives Lasersintern umfassen. Die Kunststoffgegenstände können Gegenstände umfassen, die aus einem Polyamid hergestellt sind.

Vorteilhaft kann es sein, wenn der Färbevorgang (d.h. der Färbeschritt) in einem druckdichten Färbebehälter durchgeführt wird.

Bereit gestellt wird ferner ein Kunststoffgegenstand, wobei die Oberfläche des Kunststoffgegenstandes mit einem erfindungsgemäßen Verfahren behandelt worden ist.

Der Kunststoffgegenstand kann in einem 3D-Druckverfahren, insbesondere Sinterverfahren, insbesondere selektives Lasersintern hergestellt worden sein. Der Kunststoffgegenstand kann aus einem Polyamid, insbesondere Polyamid 11 (PA 11) oder Polyamid 12 (PA 12) hergestellt sein.

Der Kunststoffgegenstand kann eine Schutzhülle für ein Mobilgerät, insbesondere Smartphone, ein Brillengestell oder Bestandteile hiervon, ein Schmuckstück, oder ein Schreibgerät umfassen.

Weitere Einzelheiten und Merkmale der Erfindung sowie konkrete Ausführungsbeispiele der Erfindung ergeben sich aus der nachfolgenden Beschreibung.

### Detaillierte Beschreibung der Erfindung

Die in einem 3D-Druckverfahren, beispielsweise Sinterverfahren, insbesondere selektives Lasersintern, hergestellten Formteile bzw. Kunststoffgegenstände werden aus einem Polyamid, beispielsweise aus dem Polyamid PA11 oder PA12, oder aus einem thermoplastischen Polyurethan hergestellt. Vorzugsweise wird ein weißes Polyamid als Ausgangsmaterial verwendet wird. Ein schwarzes Polyamid kann zwar auch als Ausgangsmaterial für die Herstellung der Formteile verwendet werden, hat sich allerdings als nicht vorteilhaft erwiesen, weil für das Einfärben der daraus hergestellten Formteile eine größere Menge an Farbstoffen verwendet werden muss, um eine ausreichende Farbabdeckung zu gewährleisten. Es können auch andere, für die Verwendung in einem 3D-Druckverfahren geeignete Kunststoffe verwendet werden.

Das Verfahren zum Behandeln von Oberflächen von mit einem 3D-Druckverfahren hergestellten Kunststoffgegenständen bzw. Formteilen umfasst drei Schritte, nämlich
- einen Vorbehandlungsschritt,
- einen Färbeschritt und
- einen Nachbehandlungsschritt,
wobei diese drei Schritte jeweils ein oder mehrere Teilschritte umfassen können.

Die im 3D-Druckverfahren hergestellten Formteile weisen nach der Entnahme aus der 3D-Druckeinrichtung eine aufgeraute bis hin zu einer stark aufgerauten Oberfläche auf, die in einem Oberflächenbearbeitungsschritt des Vorbehandlungsschrittes geglättet wird, um eine gleichmäßige und homogene Oberfläche des Formteils zu erhalten. Vor dem Oberflächenbearbeitungsschritt kann es vorteilhaft sein, das Formteil von dem daran haftenden Restpulver zu befreien, beispielsweise mittels Druckluft oder anderen hierfür geeigneten Verfahren. In dem Oberflächenbearbeitungsschritt kann das Formteil zunächst geschliffen werden, wobei Rundvibratoren oder Fliehkraftanlagen verwendet werden können. Als Schleifmittel können Kegel, schräge Zylinder, Kugeln, Pyramiden, Paraboloide oder dergleichen aus Keramik oder Kunststoff unter Zugabe eines Zusatzstoffes (Compound) verwendet werden.

Damit können auch eventuell noch vorhandene Grate an der Oberfläche des Formteils entfernt werden und gegebenenfalls scharfe Kanten abgerundet werden.

Es kann vorteilhaft sein, wenn im Anschluss an den Schleifvorgang ein Strahlvorgang durchgeführt wird, mit dem einerseits das noch vorhandene Restpulver, das nach dem Druckvorgang noch an dem Formteil haftet, entfernt wird und mit dem andererseits auch jene Bereiche des Formteils geglättet werden, an die die in dem Schleifvorgang verwendeten Schleifmittel nicht hinkommen. Damit wird ein homogenes Erscheinungsbild der gesamten Oberfläche des Formkörpers erreicht. Als Strahlmittel für den Strahlvorgang können beispielsweise Glas-, Kunststoff- oder Metallkugeln verwendet werden.

In einer Ausgestaltung der Erfindung kann auf den Schleifvorgang auch verzichtet werden und lediglich der Strahlvorgang durchgeführt werden. In einer noch weiteren Ausgestaltung der Erfindung kann sowohl auf den Schleifvorgang als auch auf den Strahlvorgang verzichtet werden, beispielsweise dann, wenn die aufgeraute Oberfläche des Formteils ein besonderes ästhetisches Merkmal des Formteils darstellen soll.

Der Schleifvorgang und/oder der Strahlvorgang können bei Bedarf wiederholt werden oder in umgekehrter Reihenfolge ausgeführt werden. Der Schleif- und/oder Strahlvorgang gewährleistet eine homogene und insbesondere gleichmäßig glatte Oberfläche des Formteils, wodurch wiederum gewährleistet wird, dass in dem Färbeschritt ein gleichmäßiges und homogenes Färben der Oberfläche des Formteils möglich wird.

Nach dem Schleif- und/oder Strahlvorgang kann das Formteil mit einer auf über 80°C erhitzten Ameisensäure bedampft werden, um eine noch glattere Oberfläche des Formteils zu erreichen.

Nach dem Schleif- und/oder Strahlvorgang, die beide optional ausgeführt werden können, wird das Formteil für etwa 10 Minuten bis 18 Stunden in Wasser bzw. in ein Wasserbad gelegt, damit dieses Wasser aufnehmen bzw. aufsaugen kann. Es hat sich überraschenderweise gezeigt, dass Kunststoffformteile, insbesondere in einem 3D-Druckverfahren herstellte Polyamidformteile, in dem Färbeschritt den Farbstoff besser und gleichmäßiger aufnehmen, wenn die Formteile eine gewisse Menge Wasser aufgesaugt haben. Es hat sich gezeigt, dass Polyamidformteile, die mittels selektivem Lasersintern hergestellt wurden, zwischen 10 Minuten und 14 Stunden in das Wasserbad gelegt werden sollten. In Versuchen sind die Formteile für etwa 12 Stunden in das Wasserbad gelegt worden.

Nachdem sich das Formteil teilweise oder vollständig mit Wasser vollgesaugt hat (was im Wesentlichen von der Dauer des Wasserbades abhängt), wird das Formteil in einem Aufbereitungsschritt über einen vorbestimmten Zeitraum in ein auf zwischen 70°C und 100°C erhitztes klares Wasser gelegt, wobei dem Wasser ein amphoteres Netzmittel zugegeben wird. Der Formkörper wird zwischen 1 Minute und 30 Minuten in das Wasser-Netzmittel-Gemisch gelegt, wobei dieser Zeitraum vorzugsweise zwischen 2 Minuten und 10 Minuten beträgt. Versuche haben gezeigt, dass es ausreichend ist, wenn das Formteil für etwa 5 Minuten in das erhitzte Wasser-Netzmittel-Gemisch gegeben wird.

Überraschenderweise hat sich herausgestellt, dass die wässrige Vorbehandlung von Polyamidformteilen mit einem amphoteren Netzmittel vor dem Färbeschritt einerseits eine bessere Reinigung des Formteils ermöglicht und andererseits die Eindringrate und die Gleichmäßigkeit der in dem Färbeschritt applizierten Farbstoffe insgesamt erhöht.

Ein wirksames amphoteres Netzmittel (auch als Egalisierer oder Levelling Agent bezeichnet) ist beispielsweise das unter dem Handelsnamen "Albegal" bekannte Netzmittel. Bei Versuchen wurde zwischen 1 g/l und 10 g/l Albegal dem erhitzten Wasser zugegeben. Hierbei hat sich herausgestellt, dass die Zugabe von etwa 3 g/l Albegal in den meisten Fällen ausreichend ist. Handelsprodukte mit amphoteren Netzmitteln, die sich ebenfalls als geeignet erwiesen haben, sind beispielsweise "Avolan", "Leveller N-R", "Lyogen FN", oder "Uniperol SE". Es eignen sich aber auch andere amphotere Reagenzien und diese Reagenzien enthaltenden Produkte. Albegal, Avolan, Leveller, Lyogen und Uniperol sind eingetragene Warenzeichen.

Vor und/oder nach der wässrigen Vorbehandlung des Formteils mit einem amphoteren Netzmittel kann das Formteil einem Reinigungsschritt unterzogen werden, beispielsweise unter Verwendung einer Ultraschallreinigungseinrichtung, der gegebenenfalls ein Lösungsmittel, beispielsweise Isopropanol, zugegeben wird.

Nach diesen Vorbehandlungsschritten kann das Formteil dem Färbeschritt zugeführt werden.

In dem Färbeschritt wird zunächst ein Färbegemisch hergestellt, wobei ein Farbstoff in einem Lösungsmittel aufgelöst wird. Als Farbstoffe können beispielsweise Metallkomplexfarbstoffe, Säurefarbstoffe, Reaktivfarbstoffe, Azofarbstoffe, Dispersionsfarbstoffe oder Mischungen hiervon verwendet werden. Je nach gewünschter Farbintensität des einzufärbenden Formteils werden dem Lösungsmittel zwischen 0,05 g/l und 50 g/l des Farbstoffes zugegeben. Es hat sich gezeigt, dass in den meisten Fällen ein optimales Färbeergebnis bereits mit einer Farbstoffmenge zwischen 0,1 g/l und 10 g/l Farbstoff erreicht werden kann.

Als Lösungsmittel kann Wasser, vorzugsweise destilliertes Wasser verwendet werden.

Die Menge des zugegebenen Farbstoffes hängt im Wesentlichen von dem gewünschten Färbeergebnis ab. Je höher der Anteil des Farbstoffes bezogen auf das Färbegemisch ist, desto dunkler ist der Farbton des gefärbten Formteils.

Für die Herstellung des Färbegemisches wird zunächst der ausgewählte Farbstoff in Wasser aufgelöst und anschließend mit heißem Wasser verdünnt und gut vermischt. Für das Auflösen des Farbstoffes in dem Wasser ist die Temperatur des Wassers so einzustellen, dass vorzugsweise ein vollständiges Auflösen des Farbstoffes in dem Wasser gewährleistet ist. Hierzu kann beispielsweise ein Magnetrührer verwendet werden.

Das so erhaltene Farbstoff-Wasser-Gemisch wird dann in einen mit etwa 60°C warmes Wasser gefüllten Färbebehälter gegeben, wobei in dem Färbebehälter der Anteil des Farbstoffes bezogen auf das Wasser die vorstehend genannten Anteile aufweist. Für das Färben können an sich bekannte Färbemaschinen verwendet werden.

Das Färbegemisch wird nun auf eine Färbetemperatur zwischen 60°C und 180°C erhitzt, wobei Versuche gezeigt haben, dass eine Färbetemperatur zwischen 90°C und 130°C in den meisten Fällen ein optimales Färbeergebnis gewährleistet. Die einzustellende Färbetemperatur hängt beispielsweise davon ab, mit welchem Ausgangsmaterial die einzufärbenden Kunststoffgegenstände bzw. Formteile hergestellt worden sind. So kann es sein, dass in Abhängigkeit des verwendeten Ausgangsmaterials ein optimales Färbeergebnis erst bei einer Färbetemperatur von über 130°C erreicht wird. In jedem Fall darf die Färbetemperatur den Schmelzpunkt des Materials des einzufärbenden Formteils nicht überschreiten. Besonders vorteilhaft ist es, wenn die Färbetemperatur die Glasübergangstemperatur des Materials der Kunststoffgegenstände nicht überschreitet. Es hat sich überraschenderweise gezeigt, dass auch unterhalb des Schmelzpunktes bzw. unterhalb der Glasübergangstemperatur des Materials der Kunststoffgegenstände ein optimales Färbeergebnis erzielt wird und der Farbstoff an der Oberfläche in den Kunststoffgegenstand eindringt und so nach dem Austrocknen eine feste Verbindung mit dem Kunststoffgegenstand eingeht. Weil damit der gesamte Färbevorgang bei niedrigeren Temperaturen abgewickelt werden kann, kann auch der Energieaufwand gering gehalten werden.

Insbesondere kann die einzustellende Färbetemperatur von dem verwendeten Farbstoff abhängen. Wird beispielsweise ein Dispersionsfarbstoff (z.B. Foron, Hersteller: Archroma) verwendet, kann es vorteilhaft ein, wenn die Färbetemperatur über 100°C beträgt. Wird hingegen ein Metallkomplexfarbstoff oder ein Säurefarbstoff verwendet können auch Färbetemperaturen unter 100°C ausreichend sein, um ein optimales Färbeergebnis zu erzielen.

Um ein Verdampfen des Lösungsmittels bzw. des Wassers während des Färbevorganges weitgehend zu verhindern und zu gewährleisten, dass das Formteil während des gesamten Färbevorganges in dem wässrigen Färbegemisch liegt, kann es vorteilhaft sein, wenn der Färbevorgang selbst in einem druckdichten Färbebehälter durchgeführt wird. Dies ist insbesondere dann notwendig, wenn der Färbevorgang mit einem Färbegemisch durchgeführt werden soll, das über die Verdampfungstemperatur des Lösungsmittels bzw. des Wassers erhitzt wird.

Vor der Zugabe des zu färbenden Formteils in den Färbebehälter wird das Färbegemisch auf einen pH-Wert eingestellt, der vorzugsweise kleiner als 11 ist. Ein pH-Wert des Färbegemisches zwischen 4 und 4,5 hat sich hierbei als besonders vorteilhaft herausgestellt. Das Einstellen des pH-Wertes kann beispielsweise unter Zugabe einer 25%-igen Essigessenz erfolgen, wobei in Abhängigkeit des einzustellenden pH-Wertes etwa zwischen 5 ml/l und 15 ml/l der Essigessenz zugegeben werden.

Anschließend wird das Färbegemisch durch Hinzugabe eines Puffersystems auf den eingestellten pH-Wert gepuffert, wobei das Puffersystem beispielsweise Natriumazetat, Essigsäure-Azetat, Natriumsulfat oder Mischungen hiervon umfassen kann. Alternativ kann auch Glaubersalz als Puffersystem verwendet werden. In Versuchen wurde etwa zwischen 1 g/l und 5 g/l, vorzugsweise zwischen 1 g/l und 2 g/l Natriumazetat dem Färbegemisch als pH-Puffer zugegeben. Ein gepuffertes Färbegemisch gewährleistet eine maximale Reproduzierbarkeit des erzielten Färbeeffekts.

In einer Ausgestaltung des erfindungsgemäßen Verfahrens kann dem Färbegemisch ein amphoteres Netzmittel, beispielsweise Albegal, zugegeben werden. In dem Färbegemisch kann Albegal färbehemmend wirken und die Farbaufnahme durch das Formteil verzögern. Beispielsweise hat sich herausgestellt, dass sich bei roten und blauen Farbstoffen bzw. Farbtönen an der Oberfläche des Formteils Flecken bilden können. Durch die Zugabe eines Netzmittels zu dem Färbegemisch kann eine solche Fleckenbildung erheblich reduziert oder vermieden werden, sodass ein insgesamt homogeneres Farbbild des eingefärbten Formteils gewährleistet werden kann.

Nachdem das Färbegemisch hergestellt worden ist, werden die einzufärbenden Formteile je nach gewünschter Farbe und Farbintensität für eine Dauer von zwischen 5 Minuten und 6 Stunden, vorzugsweise zwischen 15 Minuten und 2 Stunden in das erhitzte Färbegemisch gelegt und vorzugsweise unter ständigem Rühren bzw. Rotieren des Färbebehälters gefärbt. Je länger das einzufärbende Formteil in dem Färbegemisch verbleibt, umso dunkler wird der Farbton des gefärbten Formteils.

Anschließend werden die eingefärbten Formteile aus dem Färbegemisch bzw. aus dem Färbebehälter genommen und für eine Dauer zwischen einigen wenigen Minuten, beispielsweise 2 Minuten oder 5 Minuten, und 30 Minuten in ein auf zwischen 30°C und 80°C, vorzugsweise zwischen 50°C und 60°C erhitztes Wasserbad gelegt, wobei diesem Wasserbad zwischen 1 g/l und 10 g/l eines amphoteren Netzmittels, beispielsweise Albegal, zugegeben wird. Damit wird der Färbeschritt abgeschlossen, wobei noch lose an der Oberfläche vorhandene Farbpartikel entfernt werden.

Optional kann das eingefärbte Formteil anschließend noch in ein Ultraschallbad gelegt werden, um eine zusätzliche Reinigung der Oberfläche des Formteils vorzunehmen.

Wie vorstehend beschrieben, hängt der zu erzielende Farbton bzw. die zu erzielende Intensität der Farbe einerseits von dem Anteil des Farbstoffes bezogen auf das Färbegemisch und andererseits von der Dauer, die das einzufärbende Formteil in dem Färbegemisch verbleibt, ab. Das bedeutet, dass für das Erzielen desselben Farbergebnisses bei einer Reduzierung des Farbstoffanteiles in dem Färbegemisch die Färbedauer entsprechend erhöht werden muss.

Nach dem Färbeschritt kann das eingefärbte Formteil einer Nachbehandlung unterzogen werden, die optional ist, wobei die eingefärbten Kunststoffgegenstände bzw. Formteile zunächst getrocknet und anschließend die Oberfläche der Formteile imprägniert und/oder versiegelt werden.

Zum Imprägnieren und/oder Versiegeln der Oberfläche des Formteils wird eine Imprägnier-/Versiegelungslösung auf Polymerbasis verwendet. Besonders vorteilhaft ist es, wenn eine kapillaraktive Imprägnier-/Versiegelungslösung verwendet wird. Kapillaraktive Imprägnier-/Versiegelungslösungen haben den Vorteil, dass sie durch den Kapillareffekt in extrem kleine Poren (bis zu 1µm Durchmesser) gelangen und diese verschließen können. Die Formteile werden für einen Zeitraum zwischen 5 Minuten und 30 Minuten in die Imprägnier-/Versiegelungslösung gelegt und anschließend getrocknet, wobei zum Trocknen der imprägnierten bzw. versiegelten Formteile diese in eine Trocknungsvorrichtung, etwa ein Ofen, gelegt werden können.

Optional kann vor und/oder nach dem Imprägnieren bzw. Versiegeln die Oberfläche des Formteils bzw. des Kunststoffgegenstandes nochmals geschliffen bzw. gestrahlt werden. Als letzter Schritt des erfindungsgemäßen Verfahrens zum Behandeln von Oberflächen von in einem 3D-Druckverfahren hergestellten Kunststoffgegenstände bzw. Formteile kann die Oberfläche noch poliert werden, um die durch das Imprägnieren bzw. Versiegeln entstandene leicht raue Oberfläche zu glätten.

Die Erfindung wird durch die folgenden Beispiele näher veranschaulicht.

### Beispiel 1:

Die Formteile wurden mit den Ausgangsmaterialien Polymer PA12 oder Polymer PA11 in einem selektiven Lasersinterverfahren hergestellt.

Die Formteile wurden nach der Entnahme aus der 3D-Druckvorrichtung von dem überschüssigen Polyamid-Pulver befreit und anschließend in Rundvibratoren unter Verwendung von verschiedenen Schleifmitteln geschliffen. Nach dem Schleifen wurde die Oberfläche des Formteils mit kugelförmigen Strahlmitteln gestrahlt, um auch Bereiche der Oberfläche des Formteils zu glätten, an denen die Schleifmittel nicht hingekommen sind. Beispielsweise kann das Formteil an der Oberfläche hervorstehende Bereiche, etwa eine Schrift, aufweisen, wobei die Schleifmittel aufgrund ihrer Geometrie bzw. Größe nicht in die Eckbereiche zwischen Oberfläche und Schrift gelangen. Durch das Schleifen und/oder Strahlen wird ein homogenes Erscheinungsbild der gesamten Oberfläche des Formteils erreicht, was sich positiv auf eine gleichmäßige Farbaufnahme in dem Färbeschritt auswirkt, sodass auch ein homogenes und über die gesamte Oberfläche gleichmäßiges Farbbild gewährleistet wird.

Nach dem Strahlen des Formteils ist dieses mit einer auf etwa 90°C erhitzten Ameisensäure bedampft worden, um die Oberfläche des Formteils noch weiter zu glätten.

Die geschliffenen und gestrahlten Formteile sind dann für etwa 6 Stunden in ein Wasserbad gelegt worden, damit die Formteile eine gewisse Menge an Wasser aufnehmen bzw. aufsaugen können. Es hat sich überraschenderweise gezeigt, dass bei Formteilen, die eine gewisse Menge an Wasser aufgesaugt haben, in dem nachfolgenden Färbeschritt eine bessere und insbesondere eine gleichmäßigere Färbung erreicht werden. Im Anschluss an diesen Wässerungsschritt ist das Formteil für etwa 5 Minuten in klares, kochendes Wasser gelegt worden, wobei dem Wasser 3 g/l Albegal als amphoteres Netzmittel zugegeben wurde. Auch hier hat sich überraschenderweise gezeigt, dass durch die Zugabe eines amphoteren Netzmittels die Farbaufnahme in dem anschließenden Färbeschritt erheblich verbessert werden kann und ein wesentlich homogeneres Färbeergebnis erzielt werden kann.

Nach der Vorbehandlung wurde das Formteil einem Färbeschritt unterzogen, in dem das Formteil rot eingefärbt wurde.

Zunächst wurde ein Färbegemisch hergestellt, indem 5 g/l (bezogen auf das Färbegemisch) des Metallkomplexfarbstoffes "Lanaset Red 2B" (Hersteller: Huntsman Textile Effects) in Wasser aufgelöst wurde und mit heißem Wasser verdünnt und gut vermischt wurde. Diese Lösung wurde dann in ein mit ca. 60°C warmes Wasser gefüllten Färbebehälter zugegeben, gut vermischt und erhitzt, wobei das Farbstoff-Wasser-Gemisch mit etwa 2°C/min bis 3 C/min auf etwa 96°C erhitzt wurde. Anschließend wurde 8 ml/l (bezogen auf das Färbegemisch) einer 25%-igen Essigessenz zugegeben, um den pH-Wert der Farbstoff-Wasser-Mischung auf etwa 4,5 einzustellen. Um ein reproduzierbares Ergebnis zu erhalten, wurde diese Mischung unter Zugabe von 1g/l bis 2g/l Natriumazetat auf den eingestellten pH-Wert gepuffert.

Anschließend wurde das Formteil für etwa 15 Minuten in dieses Färbegemisch gelegt und unter ständigem Rühren bzw. Rotieren des Färbebehälters gefärbt.

Im Anschluss daran sind die gefärbten Formteile für etwa 15 Minuten in ein 50°C bis 60°C warmes Wasserbad gelegt worden, wobei dem Wasserbad etwa 5 g/l Albegal zugegeben wurde, um lose Farbpartikel von der Oberfläche des Formteils zu entfernen.

Anschließend wurden die Teile getrocknet und imprägniert, wobei für das Imprägnieren eine Imprägnierlösung auf Polymerbasis verwendet wurde. In diesem Beispiel ist eine kapillaraktive Imprägnierlösung auf Polymerbasis verwendet. Das Formteil wurde für etwa 15 Minuten in der Imprägnierlösung liegen gelassen und anschließend getrocknet, wobei der Trocknungsvorgang mit Hilfe einer Trocknungseinrichtung, etwa ein Ofen, beschleunigt werden kann.

Bei allen Versuchen, auch bei den Versuchen gemäß der nachfolgend beschriebenen Beispiele, hat sich gezeigt, dass der Farbstoff etwa 0,5 mm in das Material des Formteils eindringt, sodass einerseits tatsächlich das Material des Formteils die Farbe aufgenommen hat und nicht nur lediglich die Oberfläche des Formteils mit einer Farbschicht überzogen wurde, wie es beispielsweise bei einem Lackierverfahren der Fall wäre. Andererseits wird damit gewährleistet, dass der Farbstoff nicht abplatzen kann und dass bei kleineren Kratzern die Ursprungsfarbe des Formteils nicht zum Vorschein kommt. Es hat sich gezeigt, dass dieses Ergebnis auch bei Färbetemperaturen unterhalb des Schmelzpunktes bzw. unterhalb der Glasübergangstemperatur des Material der Kunststoffgegenstände erzielt wird.

### Beispiel 2:

Die Formteile wurden gemäß Beispiel 1 vorbehandelt, wobei die Formteile nicht 6 Stunden sondern 12 Stunden in das Wasserbad gelegt wurden, damit sie Wasser aufnehmen können. Es hat sich gezeigt, dass bei einem Wasserbad von über 12 Stunden kein zusätzliches Wasser mehr von dem Formteil aufgenommen wird, weil sich das Formteil spätestens nach 12 Stunden mit Wasser vollgesaugt hat.

Die Formteile wurden dann entsprechend Beispiel 1 dem Färbeschritt unterzogen, wobei sich gezeigt hat, dass bei dem gleichen Anteil des Farbstoffes bezogen auf das Färbegemisch wie in Beispiel 1 ein satterer roter Farbton erreicht wurde, was auf die höhere Wasseraufnahme des Formteils in dem Wasserbad zurückzuführen ist. Der Nachbehandlungsschritt wurde entsprechend Beispiel 1 durchgeführt.

Es hat sich aber gezeigt, dass bereits ein Wasserbad von wenigen Minuten, z.B. 2 Minuten bis 5 Minuten, zu einer Wasseraufnahme durch das Formteil führt, die ausreichend sein kann, um das Färbeergebnis positiv zu beeinflussen.

### Beispiel 3:

Der Vorbehandlungsschritt, der Färbeschritt und der Nachbehandlungsschritt wurden entsprechend Beispiel 2 durchgeführt, wobei im Unterschied zu dem Beispiel 2 dem Färbegemisch 8 g/l des roten Farbstoffes "Lanaset Red 2B" zugegeben wurde. Dadurch wurde ein noch intensiverer Farbton erreicht. Der Versuch gemäß Beispiel 3 wurde mit einem Färbegemisch wiederholt, bei dem 10 g/l des Farbstoffes dem Färbegemisch zugegeben wurden. Es hat sich gezeigt, dass sich die Farbaufnahme und damit auch die Farbintensität gegenüber einem Anteil von 8 g/l des Farbstoffes nur mehr unwesentlich verändern.

### Beispiel 4:

Das Formteil wurde entsprechend Beispiel 1 vorbehandelt, gefärbt und nachbehandelt, wobei im Unterschied zum Beispiel 1 als Farbstoff "Lanaset Black B GR" (Hersteller: Huntsman Textile Effects) verwendet wurde, um das Formteil schwarz einzufärben. "Lanaset Black B GR" ist eine Mischung aus Azo- und Azo-Metallkomplex-Farbstoffen. Im Unterschied zum Beispiel 1 wurde der pH-Wert des Färbegemisches hier auf den Wert 4 eingestellt und unter Zugabe eines pH-Puffers auf diesen Wert gepuffert. Das Ergebnis war ein Formteil, das einen satten schwarzen Farbton aufgewiesen hat.

### Beispiel 5:

Der Vorbehandlungsschritt, der Färbungsschritt und der Nachbehandlungsschritt sind entsprechend Beispiel 1 durchgeführt worden, wobei in diesem Beispiel anstelle des im Beispiel 1 verwendeten Farbstoffes der rote Azofarbstoff "ERIONYL RED A-3BN-01" (Hersteller: Huntsman Textile Effects) verwendet wurde. Das Ergebnis war ein Formteil mit einer satten neonroten Oberfläche.

### Beispiel 6:

Der Vorbehandlungsschritt ist entsprechend Beispiel 1 durchgeführt worden, wobei die Formteile nicht 6 Stunden sondern lediglich 10 Minuten in das Wasserbad gelegt wurden. Es hat sich gezeigt, dass die Formteile bereits nach 10 Minuten genügend Wasser aufgenommen haben. Der Nachbehandlungsschritt ist ebenfalls entsprechend Beispiel 1 durchgeführt worden.

In dem Färbeschritt ist zunächst ein Färbegemisch hergestellt worden, indem 5 g/l (bezogen auf das Färbegemisch) des Farbstoffes "Lanaset Blue 5G" (Hersteller: Huntsman Textile Effects) in Wasser aufgelöst wurde und mit heißem Wasser verdünnt und gut vermischt wurde. Diese Lösung wurde dann in ein mit ca. 60°C warmes Wasser gefüllten Färbebehälter zugegeben, gut vermischt und erhitzt, wobei das Farbstoff-Wasser-Gemisch mit etwa 2°C/min bis 3 C/min auf etwa 96°C erhitzt wurde. In diesem Beispiel wurde der pH-Wert des Färbegemisches nicht zusätzlich eingestellt, sondern so belassen wie er war. Der pH-Wert des Färbegemisches hat etwa 7,5 betragen.

In diesem Beispiel wurde dem Färbegemisch etwa 2g/l Albegal als Netzmittel zugegeben. Eine Fleckenbildung an der Oberfläche des gefärbten Formteils konnte so verhindert werden.

Anschließend wurde das Formteil für etwa 30 Minuten in dieses Färbegemisch gelegt und unter ständigem Rühren bzw. Rotieren des Färbebehälters gefärbt.

Im Anschluss daran sind die gefärbten Formteile für etwa 15 Minuten in ein 50°C bis 60°C warmes Wasserbad gelegt worden, wobei dem Wasserbad etwa 5 g/l Albegal zugegeben wurde, um lose Farbpartikel von der Oberfläche des Formteils zu entfernen.

### Beispiel 7:

Der Vorbehandlungsschritt und der Nachbehandlungsschritt sind entsprechend Beispiel 6 durchgeführt worden.

In dem Färbeschritt ist zunächst ein Färbegemisch für eine hellgrüne Farbe hergestellt worden. Hierzu wurde ein Farbstoffgemisch bestehend aus 90% "Lanaset Yellow 4GN" (Hersteller: Huntsman Textile Effects) und 10% "Lanaset Blue 5GN" (Hersteller: Huntsman Textile Effects) hergestellt und in Wasser aufgelöst und anschließend mit heißem Wasser verdünnt und gut vermischt. Diese Lösung wurde dann in ein mit ca. 60°C warmes Wasser gefüllten Färbebehälter zugegeben, gut vermischt und erhitzt, wobei das Farbstoff-Wasser-Gemisch auf etwa 96°C erhitzt wurde. Der Anteil des Farbstoffgemisches in dem Färbegemisch hat 8g/l betragen.

Das einzufärbende Formteil wurde dann für etwa 30 Minuten in das Färbegemisch gelegt und unter ständigem Rühren bzw. Rotieren des Färbebehälters gefärbt.

Im Anschluss daran sind die gefärbten Formteile für etwa 15 Minuten in ein 50°C bis 60°C warmes Wasserbad gelegt worden, wobei dem Wasserbad etwa 5 g/l Albegal zugegeben wurde, um lose Farbpartikel von der Oberfläche des Formteils zu entfernen.

Die vorgenannten Beispiele wurden mit Säurefarbstoffen, Dispersionsfarbstoffen und Reaktivfarbstoffen wiederholt, wobei auch mit diesen Farbstoffen gleichmäßig und homogen gefärbte Oberflächen der Formteile erzielt wurden. Selbstverständlich können auch Metallkomplexfarbstoffe, Säurefarbstoffe, Reaktivfarbstoffe, Dispersionsfarbstoffe oder Azofarbstoffe anderer Hersteller verwendet werden.

Als überraschend vorteilhaft hat sich erwiesen, wenn die einzufärbenden Formteile vor dem Färbeschritt für einen gewissen Zeitraum in ein Wasserbad gelegt werden, damit die Formteile eine gewisse Menge Wasser aufnehmen können. Dies hat zu einer gleichmäßigeren Färbung geführt. Unter Hinzugabe eines amphoteren Netzmittels, etwa Albegal, dem Wasserbad wird die Farbaufnahme durch das Formteil wesentlich verbessert. Durch Hinzugabe eines Netzmittels zu dem Färbegemisch kann zudem eine Fleckenbildung reduziert oder gar verhindert werden. Ferner hat sich überraschenderweise gezeigt, dass mit dem erfindungsgemäßen Verfahren die Farbstoffe in das Material eindringen und nicht nur lediglich an der Oberfläche haften bleiben.

Ferner wurde festgestellt, dass eine besonders gute Lichtechtheit bzw. UV-Beständigkeit der eingefärbten Oberflächen des Formteils mit Metallkomplexfarbstoffen erreicht wurde.

Das Imprägnieren und/oder Versiegeln der eingefärbten Oberfläche mit einer Imprägnier-/Versiegelungslösung auf Polymerbasis hat den Vorteil, dass sich nicht nur eine Versiegelungsschicht über die Oberfläche legt, sondern dass die Imprägnier-/Versiegelungslösung auch in kleinste Poren des Formteils eindringt, sodass verhindert wird, dass Wasser, Öle, Luft, Gase oder sonstige Fremdkörper in die Oberfläche des Formkörpers eindringen können. Zudem wird einem vorzeitigen Verschleiß der Oberflächen des Formteils entgegenwirkt.

In den vorgenannten Beispielen wurden Schutzhüllen für ein Mobilgerät, insbesondere Smartphones, die in einem selektiven Lasersinterverfahren hergestellt worden sind, eingefärbt. Selbstverständlich können auch andere, in einem 3D-Druckverfahren hergestellte Kunststoffgegenstände mit dem erfindungsgemäßen Verfahren behandelt werden, wobei das erfindungsgemäße Verfahren nicht nur auf Kunststoffgegenstände beschränkt ist, die aus einem Polyamid oder aus einem thermoplastischen Polyurethan hergestellt wurden. Beispielsweise können auch Rahmen für Brillen bzw. Brillengestelle oder sonstige Alltagsgegenstände, die in einem 3D-Druckverfahren hergestellt werden können, mit dem erfindungsgemäßen Verfahren behandelt bzw. eingefärbt werden.

Mit dem erfindungsgemäßen Verfahren kann an der gefärbten Oberfläche des Formteils auch ein "Ton-in-Ton"-Effekt erzielt werden. Hierzu wird in dem Vorbehandlungsschritt nicht das gesamte Formteil in ein ein amphoteres Netzmittel, beispielsweise Albegal, enthaltendes heißes Wasser gelegt, sondern es wird beispielsweise ein Muster mit einer ein amphoteres Netzmittel enthaltenden Lösung auf die Oberfläche des Formteils aufgedruckt, beispielsweise mittels eines Stempels. Die verwendete Lösung kann beispielsweise zwischen 2% und 15% eines amphoteren Netzmittels aufweisen. Die Viskosität der Lösung ist so einzustellen, dass das aufgedruckte Muster nicht verläuft. Das Formteil mit dem so aufgedruckten Muster wird dann bei Raumtemperatur zwischen 30 Minuten und 90 Minuten liegengelassen. Anschließend wird das Formteil mit klarem Wasser gereinigt und dem erfindungsgemäßen Färbeschritt zugeführt und in einem Färbegemisch wie vorstehend beschrieben eingefärbt. Im Ergebnis erhält man dadurch eine Oberfläche, bei der das aufgedruckte Muster tiefer gefärbt ist als der Rest der Oberfläche, d.h. es wird ein "Ton-in-Ton"-Effekt erzielt.

Offenbart wird ferner ein Verfahren zum Behandeln von Oberflächen von Kunststoffgegenständen, wobei in einem Färbeschritt
- ein Färbegemisch hergestellt wird, wobei ein Farbstoff ausgewählt aus der Gruppe umfassend Metallkomplexfarbstoffe, Säurefarbstoffe, Reaktivfarbstoffe, Azofarbstoffe, Dispersionsfarbstoffe, und Mischungen hiervon, in einem Lösungsmittel aufgelöst wird, wobei dem Lösungsmittel bezogen auf einem Liter zwischen 0,05 g und 50 g, vorzugsweise zwischen 0,05 g und 25 g, besonders bevorzugt zwischen 0,1 g und 10 g des Farbstoffes zugegeben werden,
- das Färbegemisch auf eine Färbetemperatur zwischen 60°C und 180°C, vorzugsweise zwischen 80°C und 150°C, besonders bevorzugt zwischen 90°C und 130°C erhitzt wird,
- die Kunststoffgegenstände zum Einfärben für eine Dauer zwischen 5 Minuten und 6 Stunden, vorzugsweise zwischen 5 Minuten und 4 Stunden, besonders bevorzugt zwischen 15 Minuten und 2 Stunden in das erhitzte Färbegemisch gelegt werden.

## Patentansprüche

1. Verfahren zum Behandeln von Oberflächen von in einem 3D-Druckverfahren hergestellten Kunststoffgegenständen, wobei in einem Färbeschritt
- ein Färbegemisch hergestellt wird, wobei ein Farbstoff ausgewählt aus der Gruppe umfassend Metallkomplexfarbstoffe, Säurefarbstoffe, Reaktivfarbstoffe, Azofarbstoffe, Dispersionsfarbstoffe, und Mischungen hiervon, in einem Lösungsmittel aufgelöst wird, wobei dem Lösungsmittel bezogen auf einem Liter zwischen 0,05 g und 50 g des Farbstoffes zugegeben werden,
- das Färbegemisch auf eine Färbetemperatur zwischen 60°C und 180°C erhitzt wird,
- die Kunststoffgegenstände zum Einfärben für eine Dauer zwischen 5 Minuten und 6 Stunden in das erhitzte Färbegemisch gelegt werden,
wobei die Färbetemperatur den Schmelzpunkt des Materials der Kunststoffgegenstände nicht überschreitet, und
wobei in einem Oberflächenbearbeitungsschritt die Oberfläche der Kunststoffgegenstände unter Verwendung von Kunststoffkugeln gestrahlt wird, um die Oberfläche der Formteile zu glätten.

2. Verfahren nach dem vorhergehenden Anspruch, wobei dem Lösungsmittel bezogen auf einem Liter zwischen 0,05 g und 25 g, besonders bevorzugt zwischen 0,1 g und 10 g des Farbstoffes zugegeben werden und/oder wobei das Färbegemisch auf eine Färbetemperatur zwischen 80°C und 150°C, besonders bevorzugt zwischen 90°C und 130°C erhitzt wird, und/oder wobei die Kunststoffgegenstände zum Einfärben für eine Dauer zwischen 5 Minuten und 4 Stunden, besonders bevorzugt zwischen 15 Minuten und 2 Stunden in das erhitzte Färbegemisch gelegt werden.

3. Verfahren nach einem der vorhergehenden Ansprüche, wobei das Lösungsmittel Wasser, vorzugsweise destilliertes Wasser umfasst.

4. Verfahren nach einem der vorhergehenden Ansprüche, wobei die eingefärbten Kunststoffgegenstände für eine Dauer zwischen 5 Minuten und 30 Minuten in auf zwischen 30°C und 80°C, vorzugsweise zwischen 45°C und 65°C erhitztes Wasser, aufweisend zwischen 1g/l und 10g/l eines amphoteren Netzmittels, gelegt werden.

5. Verfahren nach einem der vorhergehenden Ansprüche, wobei das Färbegemisch, vorzugsweise vor dem Einfärben der Kunststoffgegenstände, auf einen pH-Wert kleiner 11, vorzugsweise auf einen pH-Wert zwischen 3,5 und 9,5, besonders bevorzugt auf einen pH-Wert zwischen 4 und 4,5 eingestellt wird.

6. Verfahren nach Anspruch 5, wobei das Färbegemisch durch Hinzugabe eines Puffersystems auf den eingestellten pH-Wert gepuffert wird, wobei das Puffersystem vorzugsweise ausgewählt wird aus der Gruppe umfassend Natriumacetat, Essigsäure-Acetat, Natriumsulfat, und Mischungen hiervon.

7. Verfahren nach einem der vorhergehenden Ansprüche, wobei dem Färbegemisch ein amphoteres Netzmittel zugegeben wird.

8. Verfahren nach einem der vorhergehenden Ansprüche, wobei in einem Wässerungsschritt eines Vorbehandlungsschrittes, der vor dem Färbeschritt ausgeführt wird, die Kunststoffgegenstände für einen vorbestimmten Zeitraum, vorzugsweise zwischen 10 Minuten und 18 Stunden, besonders bevorzugt zwischen 6 Stunden und 14 Stunden, in Wasser gelegt werden.

9. Verfahren nach dem vorhergehenden Anspruch, wobei der Vorbehandlungsschritt einen Aufbereitungsschritt umfasst, der nach dem Wässerungsschritt ausgeführt wird, wobei in dem Aufbereitungsschritt die Kunststoffgegenstände für einen vorbestimmten Zeitraum, vorzugsweise zwischen 1 Minute und 30 Minuten, besonders bevorzugt zwischen 2 Minuten und 10 Minuten, in auf zwischen 70°C und 100°C erhitztes Wasser gelegt werden, wobei dem erhitzten Wasser ein amphoteres Netzmittel zugegeben wird.

10. Verfahren nach einem der beiden vorhergehenden Ansprüche, wobei der Vorbehandlungsschritt den Oberflächenbearbeitungsschritt umfasst, der vor dem Wässerungsschritt ausgeführt wird, wobei vorzugsweise in dem Oberflächenbearbeitungsschritt die Oberfläche der Kunststoffgegenstände mit einer Ameisensäure bedampft wird.

11. Verfahren nach einem der vorhergehenden Ansprüche, wobei in einem Imprägnierschritt eines Nachbehandlungsschrittes, der nach dem Färbeschritt ausgeführt wird, die Kunststoffgegenstände zunächst getrocknet und anschließend die Oberfläche der Kunststoffgegenstände imprägniert und/oder versiegelt wird, vorzugsweise mit einer Imprägnier-/Versiegelungslösung auf Polymerbasis, insbesondere eine kapillaraktive Imprägnier-/Versiegelungslösung, wobei die Kunststoffgegenstände vorzugsweise für einen vorbestimmten Zeitraum, vorzugsweise zwischen 5 Minuten und 30 Minuten, besonders bevorzugt zwischen 10 Minuten und 20 Minuten, in die Imprägnier-/Versiegelungslösung gelegt werden und anschließend getrocknet werden.

12. Verfahren nach dem vorhergehenden Anspruch, wobei vor und/oder nach dem Imprägnierschritt die Oberfläche der Kunststoffgegenstände, vorzugsweise unter Verwendung von Schleif- und/oder Strahlmitteln, geschliffen und/oder gestrahlt werden, und/oder wobei nach dem Imprägnierschritt die Oberfläche der imprägnierten und/oder versiegelten Kunststoffgegenstände poliert wird.

13. Verfahren nach einem der vorhergehenden Ansprüche, wobei das 3D-Druckverfahren ein Sinterverfahren, insbesondere ein selektives Lasersintern umfasst, und/oder wobei die Kunststoffgegenstände Gegenstände umfassen, die aus einem Polyamid hergestellt sind.

14. Verfahren nach einem der vorhergehenden Ansprüche, wobei der Färbeschritt in einem druckdichten Färbebehälter durchgeführt wird.
